# EUROPEAN PATENT SPECIFICATION

(11) **EP 2 893 070 B1**
(45) Date of publication and mention of the grant of the patent: **04.03.2020**
(21) Application number: 13792457.7
(22) Date of filing: 06.09.2013
(51) Int. Cl.: A47C 31/00, B29C 70/22, B60N 2/70, B64D 11/06, D04H 3/045, D04H 3/04, D04H 3/10, D04H 3/12, B60N 2/58, E04B 2/00, A47D 1/00, B32B 19/00, B32B 15/02

(54) **MULTI -AXIAL GRID NETTING**
MULTIAXIALES GITTERNETZ
TREILLIS À GRILLE MULTIAXIALE

(30) Priority: 06.09.2012 IT BO20120472
(43) Date of publication of application: 15.07.2015
(73) Proprietor: Sailmaker International S.p.A., 60100 Ancona (IT)
(72) Inventor: FIORENZI, Oliviero, I-60027 Osimo (Ancona) (IT)
(74) Representative: Casadei, Barbara
(86) International application number: PCT/IB2013/058340
(87) International publication number: WO 2014/037909

(56) References cited:
- DE-U1- 29 904 191
- GB-A- 703 345
- JP-A- 2007 056 582
- US-A- 3 314 841
- US-A1- 2006 121 805
- US-A1- 2007 032 150

## Description

### Technical field

This invention relates to a multi-axial grid netting.

### Background art

More specifically, the invention addresses the field of grid nettings combining high strength and elasticity with functionality and attractive appearance.

However, grid nettings known up to now are, over time, subject to maintenance which increases overall maintenance costs.

Examples of knowns multiaxial grid products are disclosed at documents US3314841 and JP2007056582A.

### Disclosure of the invention

This invention has for an aim, in particular, to provide a multi-axial grid netting that is strong, light in weight and at the same time does not require maintenance over time.

The technical purpose and aims specified are achieved by a multi-axial grid netting having the features set out in independent claim 1.

### Brief description of the drawings

The invention will now be described with reference to the accompanying drawings which illustrate a non-limiting embodiment of it and in which:
- Figure 1 shows an architectural facing comprising the multi-axial grid netting according to this invention;
- Figure 2 shows a perspective view of a module of the architectural facing of Figure 1;
- Figure 3 shows a second perspective view of the module of Figure 2;
- Figure 4 shows a scaled-up detail of the module of Figure 3;
- Figure 5 shows a first embodiment of a tile comprising the multi-axial grid netting according to the invention;
- Figure 6 shows a scaled-up detail of the tile of Figure 5;
- Figure 7 shows a second embodiment of a tile comprising the multi-axial grid netting according to the invention;
- Figure 8 shows a scaled-up detail of the tile of Figure 7;
- Figure 9 shows a perspective view of an aircraft seat comprising the multi-axial grid netting according to the invention;
- Figure 10 shows a perspective view of a seat comprising the multi-axial grid netting according to the invention;
- Figure 11 shows a schematic sectional view of the multi-axial grid netting according to the invention.

### Detailed description of preferred embodiments of the invention

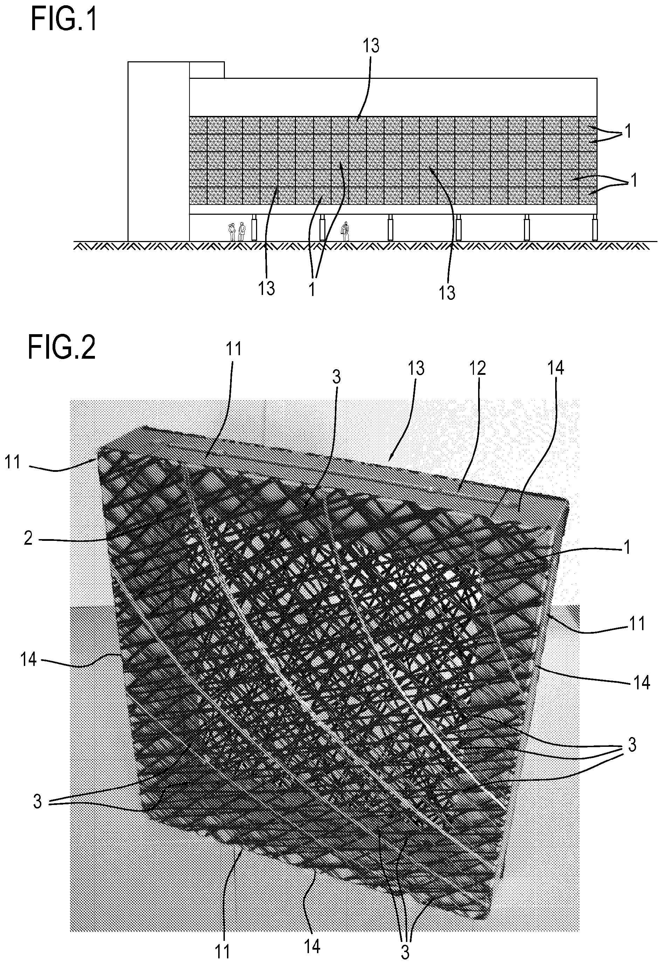

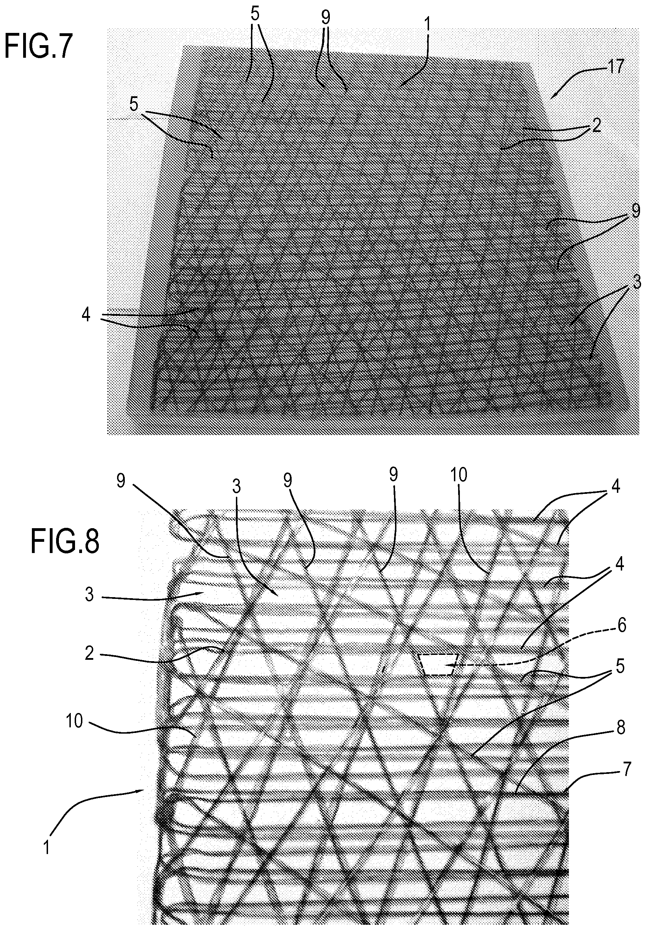

With reference to Figures 1 to 10, the numeral 1 denotes a multi-axial grid netting

More specifically, the multi-axial grid netting 1 according to the invention is a permeable netting because it comprises a grid 2 whose meshes 3 are open from one side to the other.

The grid netting 1 is defined as multi-axial in that it comprises a plurality of first and second threads 4 and 5 which are interlaced and superposed along respective directions of extension.

The term "to interlace" means to join or interconnect by superposing and crossing the first and second threads 4 and 5 to form the grid netting 1.

In effect, the grid netting 1 is made by superposing threads 4 and 5 straight and curved accordingly, following methods not suitable for the weaving of fabrics.

The term "superposing" is used to exclude the lamination process by which, for example, non-woven fabrics are made.

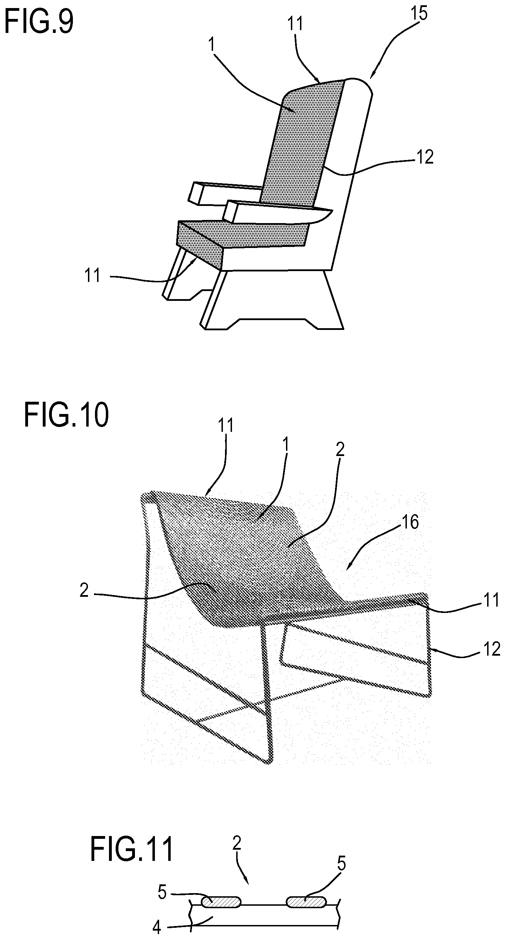

Figure 11 shows how the first and second threads 4 and 5 are superposed and crossed.

The directions of extension of the first and second threads 4 and 5 are inclined to each other at angles in the range between 0°and 90°.

For example, as illustrated in Figure 2, the limits of the 0° to 90° range are excluded.

The first and second interlaced and superposed threads 4 and 5 define the grid 2.

More precisely, as illustrated in Figures 2 to 8, the meshes 3 of the grid 2 present a closed broken line 6 which is irregular, in particular whose sides differ in length and make different angles with each other.

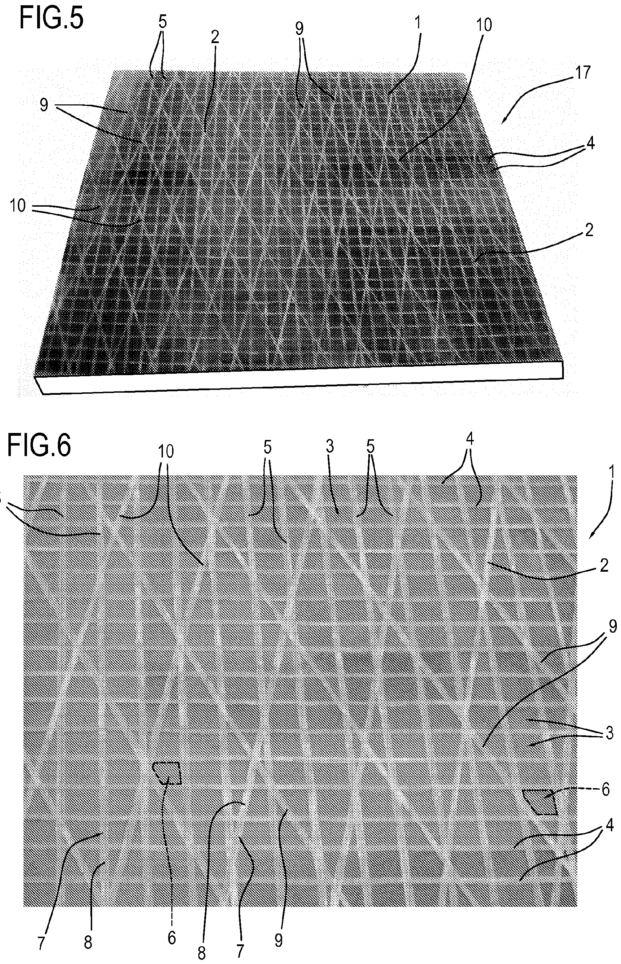

With reference in particular, to Figure 6, the meshes 3 of the grid 2 present a closed broken line 6 which is regular, that is to say, whose sides are the same in length and whose angles are the same with each other.

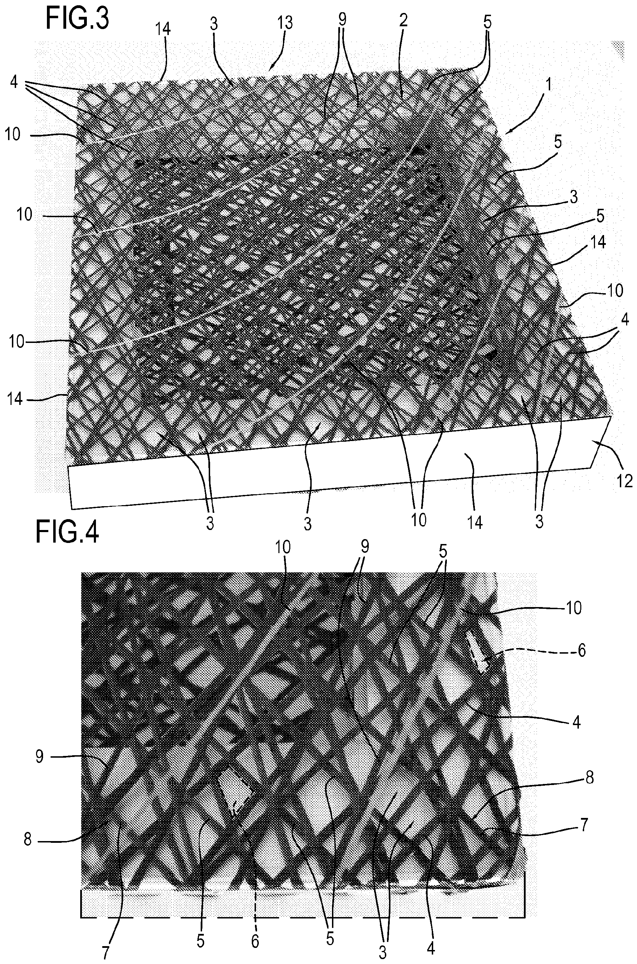

The meshes 3 of the grid 2 illustrated to Figure 6 present a closed broken line 6 of which at least one side is of a different length than the other or/and of which at least one angle is different than the others. Figures 4, 5 and 6 are not part of the invention because threads 4 and 5 are not straight and curved.

As may be inferred from the accompanying drawings, the meshes 3 of the grid 2 present irregular closed broken lines 6.

Each first and second thread 4, 5 comprises a plurality of strands 7 defined by thin, elongate elements placed side by side and joined to each other by impregnation with an adhesive resin 8.

Preferably, the grid netting 1 comprises a plurality of third threads 9 interlaced with the first and second threads 4 and 5 and arranged above, below and in between the first and second threads 4 and 5.

The third threads 9 have their own direction of extension, independent of the directions of extension of the first and second threads 4 and 5.

The direction of extension of the third threads 9 is inclined at respective angles to the directions of extension of the first and second threads 4 and 5.

The directions of extension of the first and third threads are inclined to each other at angles in the range between 0°and 90°, excluding and/or including the limits of the range.

The directions of extension of the second and third threads are inclined to each other at angles in the range between 0°and 90°, excluding and/or including the limits of the range.

The grid netting 1 comprises at least one fourth thread 10 superposed over the other threads 4,5 and 9.

The fourth thread 10 is a reinforcing thread for the multi-axial grid netting 1.

The reinforcement thread 10 is superposed over the other threads 4,5 and 9 according to a predetermined configuration depending on the distribution of the load the grid netting 1 is subjected to.

Advantageously, the mutual arrangement of the first, second, third and fourth threads 4,5,9 and 10 making up the grid 2 confers desired strength properties on the grid netting 1.

More specifically, the first, second, third and fourth threads 4,5,9 and 10 may be mutually arranged in such a way as to define high-strength zones on the grid netting 1.

Moreover, the mutual arrangement of the first, second, third and fourth threads 4,5,9 and 10 defines an aesthetically attractive pattern on the grid netting 1.

The threads 4,5,9 and 10 making up the grid 2 of the grid netting 1 are made from materials having a relatively high elastic modulus.

The threads 4,5,9 and 10 may be made from the following materials: carbon, Kevlar, Technora, PBO fibre, polypropylene, polyester, Pentex, Nomex, basalt fibre, Vectran, Spectra fibre, bamboo or hemp.

It should be noted that the threads 4,5,9 and 10 making up the grid 2 of the netting 1 are joined to each other by resins of various different kinds such as, for example, polyester and polyether based polyurethane resins, epoxy resins, carbamate resins, caprolactone resins or polyolefin resins.

The multi-axial grid netting 1 described can be used in a wide variety of applications which require lightweight, high-strength materials with a distinctive aesthetic appeal.

More specifically, the grid netting 1 is designed to be fixed along its perimeter edges 11 to a mounting frame 12 which keeps it tensioned.

In the building construction industry, the grid netting 1 may be mounted in modules for architectural facings 13.

The modules for architectural facings 13 comprise lengths of grid netting 1 coupled to tensioning profiles 14 which keep the lengths of netting tensioned.

Advantageously, the grid netting 1 has a darkening effect, reducing glare, as well as soundproofing and insulating effects.

As illustrated in Figure 9, the multi-axial grid netting 1 can also be used to make aircraft seats 15 given that the netting 1 does not require maintenance.

Further, as illustrated in Figure 10, the multi-axial grid netting 1 can be used to make seats 16 in general.

The multi-axial grid netting 1 can also be used in the tile and laminated glass industry.

Indeed, as illustrated in Figures 5 to 8, the multi-axial grid netting 1 can be placed in a tile 17 to improve cohesion of the material the tile 17 is made of.

Lastly, the multi-axial grid netting according to the invention is economically advantageous over prior art.

## Claims

1. A permeable multi-axial grid netting comprising a plurality of first and second threads (4, 5) which are interlaced and superposed to form a grid (2) whose meshes (3) present an irregular closed broken line (6);
the grid netting (1) comprising a plurality of third threads (9) interlaced with the first and second threads (4, 5) and arranged above, below and in between the first and second threads (4, 5);
the grid netting (1) comprising at least one fourth thread (10) superposed over the other threads (4, 5);
the fourth thread (10) being a reinforcing thread for the grid (2);
the first, second, third and fourth threads (4,5,9,10) may be mutually arranged in such a way as to define high-strength zones on the grid netting (1);
the multi-axial grid netting (1) being **characterised in that** it is a permeable netting because the meshes (3) are open from one side to the other;
the grid netting (1) being made by superposing straight and curved threads (4; 5) accordingly;
each first and second thread (4, 5) comprising a plurality of strands (7) defined by thin, elongate elements placed side by side and joined to each other by impregnation with an adhesive resin (8).

2. The netting according to claim 1, **characterized in that** the first, second, third and fourth threads (4, 5, 9, 10) form an aesthetically attractive pattern.

3. The netting according to claim 1 or 2, **characterized in that** the threads (4, 5, 9, 10) which form the grid (2) are made of carbon and/or PBO fibre and/or polypropylene and/or polyester and/or basalt fibre and/or bamboo and/or hemp.

4. The netting according to any of the claims from 1 to 3, **characterized in that** the adhesive resin (8) comprises polyester and polyether based polyurethane resins or epoxy resins or carbamate resins or caprolactone resins or polyolefin resins.

5. A module for architectural facings comprising tensioning profiles (14) and at least one length of multi-axial grid netting (1) according to claims 1 to 4 coupled to the tensioning profiles (14) along its perimeter edges (11).

6. An aircraft seat comprising the multi-axial grid netting according to claims 1 to 4.

7. A seat comprising the multi-axial grid netting according to claims 1 to 4.

8. A tile comprising the multi-axial grid netting according to claims 1 to 4.

## Patentansprüche

1. Durchlässiges multiaxiales Gitternetz, umfassend eine Vielzahl an ersten und zweiten Fäden (4, 5), die verflochten und übereinandergelegt sind, um ein Gitter (2) zu bilden, dessen Maschen (3) eine unregelmäßig geschlossene unterbrochene Linie (6) aufweisen;
wobei das Gitternetz (1) eine Vielzahl an dritten Fäden (9) umfasst, die mit den ersten und zweiten Fäden (4, 5) verflochten sind und über, unter und zwischen den ersten und zweiten Fäden (4, 5) angeordnet sind;
wobei das Gitternetz (1) mindestens einen vierten Faden (10) umfasst, der über den anderen Fäden (4, 5) liegt;
wobei der vierte Faden (10) ein Verstärkungsfaden für das Gitter (2) ist;
der erste, zweite, dritte und vierte Faden (4,5,9,10) können so zueinander angeordnet sein, dass sie Zonen hoher Festigkeit auf dem Gitternetz (1) definieren;
wobei das multiaxiale Gitternetz (1) **dadurch gekennzeichnet ist, dass** es dabei um ein durchlässiges Netz handelt, da die Maschen (3) von einer zur anderen Seite offen sind;
wobei das Gitternetz (1) durch Überlagerung von geraden und gekrümmten Fäden (4; 5) entsprechend hergestellt wird;
wobei ein jeder erste und zweite Faden (4, 5) eine Vielzahl an Strängen (7) umfasst, die durch dünne, längliche Elemente definiert sind, die nebeneinander angeordnet und durch Imprägnieren mit einem Klebharz (8) miteinander zusammengefügt sind.

2. Netz nach Anspruch 1, **dadurch gekennzeichnet, dass** der erste, zweite, dritte und vierte Faden (4, 5, 9, 10) ein ästhetisch ansprechendes Muster bilden.

3. Netz nach Anspruch 1 oder 2, **dadurch gekennzeichnet, dass** die Fäden (4, 5, 9, 10), die das Gitter (2) bilden, aus Kohlenstoff und/oder PBO-Fasern und/oder Polypropylen und/oder Polyester und/oder Basaltfaser und/oder Bambus und/oder Hanf bestehen.

4. Netz nach einem der Ansprüche 1 bis 3, **dadurch gekennzeichnet, dass** das Klebharz (8) Polyurethanharze auf Polyester- und Polyetherbasis oder Epoxidharze oder Carbamatharze oder Caprolactonharze oder Polyolefinharze umfasst.

5. Modul für architektonische Fassaden umfassend Spannprofilen (14) und mindestens eine Länge eines multiaxialen Gitternetzes (1) nach den Ansprüchen 1 bis 4, das entlang seiner Umfangskanten (11) mit den Spannprofilen (14) gekoppelt ist.

6. Flugzeugsitz, umfassend das multiaxiale Gitternetz nach den Ansprüchen 1 bis 4.

7. Sitz, umfassend das multiaxiale Gitternetz nach den Ansprüchen 1 bis 4.

8. Fliese, umfassend das multiaxiale Gitternetz nach den Ansprüchen 1 bis 4.

## Revendications

1. Treillis à grille multiaxiale comprenant une pluralité de premiers et seconds fils (4, 5) étant entrelacés et superposés pour former une grille (2) dont les mailles (3) présentent une ligne brisée (6) fermée irrégulière ;
le treillis à grille (1) comprenant une pluralité de troisièmes fils (9) entrelacés avec les premiers et seconds fils (4, 5) et disposés au-dessus des / en dessous des / et entre les seconds fils (4, 5) ;
le treillis à grille (1) comprenant au moins un quatrième fil (10) superposé sur les autres fils (4, 5) ;
le quatrième fil (10) étant un fil de renforcement de la grille (2) ;
les premier, second, troisième et quatrième fils (4, 5, 9, 10) pouvant être mutuellement disposés de manière à définir des zones super solides sur le treillis à grille (1) ;
le treillis à grille multiaxiale (1) étant **caractérisé en ce qu'**il est un treillis perméable parce que les mailles (3) sont ouvertes d'un côté à l'autre ;
le treillis à grille (1) étant réalisé en superposant des fils rectilignes et incurvés (4 ; 5) en conséquence ; chaque premier et second fil (4, 5) comprenant une pluralité de brins (7) définis par des éléments fins et allongés placés côte à côte et joints entre eux par imprégnation à l'aide d'une résine adhésive (8).

2. Treillis selon la revendication 1, **caractérisé en ce que** les premier, second, troisième et quatrième fils (4, 5, 9, 10) forment un motif esthétique séduisant.

3. Treillis selon la revendication 1 ou 2, **caractérisé en ce que** les fils (4, 5, 9, 10) formant la grille (2) sont en carbone et/ou en fibre d'oxyde de plomb et/ou en polypropylène et/ou en polyester et/ou en fibre de basalte et/ou en bambou et/ou en chanvre.

4. Treillis selon l'une quelconque des revendications de 1 à 3, **caractérisé en ce que** la résine adhésive (8) comprend des résines polyuréthane à base de polyester et de polyéther ou des résines époxy ou des résines de carbamate ou des résines de caprolactone ou des résines de polyoléfine.

5. Module pour revêtements architecturaux comprenant des profilés tenseurs (14) et au moins une longueur de treillis à grille multiaxiale (1) selon les revendications de 1 à 4 couplée aux profilés tenseurs (14) le long de ses bords périphériques (11).

6. Siège d'avion comprenant le treillis à grille multiaxiale selon les revendications de 1 à 4.

7. Siège comprenant le treillis à grille multiaxiale selon les revendications de 1 à 4.

8. Carreau comprenant le treillis à grille multiaxiale selon les revendications de 1 à 4.
